# FASCICULE DE BREVET EUROPEEN

(11) **EP 4 341 313 B1**
(45) Date de publication et mention de la délivrance du brevet: **15.01.2025**
(21) Numéro de dépôt: 22731734.4
(22) Date de dépôt: 16.05.2022
(51) Int. Cl.: C09D 4/00, C09J 4/00, C08F 220/14, C08L 33/12, C08K 5/42, C08K 5/098

(54) **COMPOSITION A BASE DE MONOMERE (METH)ACRYLATE ET DE SEL DE ZINC**
ZUSAMMENSETZUNG AUF DER BASIS VON (METH)ACRYLATMONOMER UND ZINKSALZ
COMPOSITION BASED ON (METH)ACRYLATE MONOMER AND ZINC SALT

(30) Priorité: 17.05.2021 FR 2105103
(43) Date de publication de la demande: 27.03.2024
(73) Titulaire: Bostik SA, 92700 Colombes (FR)
(72) Inventeur: MICHAUD, Guillaume, 69006 LYON (FR)
(74) Mandataire: Arkema Patent
(86) Numéro de dépôt international: PCT/FR2022/050924
(87) Numéro de publication internationale: WO 2022/243630

(56) Documents cités:
- US-A1- 2010 065 210
- US-A1- 2014 235 758
- US-B1- 6 291 593

## Description

### DOMAINE DE L'INVENTION

La présente invention concerne une composition à base de monomère (méth)acrylate et de sel de zinc.

L'invention concerne également l'utilisation de ladite composition pour la réparation et/ou le collage semi-structural ou structural de matériaux dans le domaine du transport, de la marine, de l'électronique, de l'assemblage, de l'éolien ou de la construction.

### ARRIERE-PLAN TECHNOLOGIQUE

Les compositions acryliques sont des systèmes réactifs connus réticulant par polymérisation radicalaire. Elles sont utilisées comme adhésifs, mastics et revêtements. La polymérisation radicalaire est typiquement amorcée par un système rédox qui par le biais d'une réaction d'oxydo-réduction conduit à la production de radicaux.

La majorité des systèmes acryliques sont des systèmes bicomposants. Le premier composant contient traditionnellement l'agent réducteur et les monomères réactifs, et le second composant contient l'agent oxydant. Une fois les deux composants mélangés, l'agent réducteur induit la coupure de la liaison O-O du peroxyde organique par exemple, et initie la polymérisation.

Cependant, un des problèmes de cette technique est l'inhibition par l'oxygène. En effet, l'oxygène présent dans l'air à son état triplet va venir interagir avec les radicaux formés à la surface de l'échantillon, les empêchant ainsi d'amorcer la polymérisation. Cette inhibition s'exprime essentiellement en surface puisque l'oxygène pénètre peu ou pas en profondeur selon le grammage déposé. En outre, la réaction de polymérisation est souvent lente pour les surfaces exposées à l'oxygène de l'air lesquelles, partiellement polymérisées, restent souvent collantes ou « tacky ». US2014/235758A1 décrit une composition bi-composante réticulable comprenant un composant A comprenant entre autres un monomère (méth)acrylate, une amine tertiaire comme agent réducteur, zinc néodécanoate comme sel de zinc, un modificateur d'impact de type coeur-écorce et un composant B comprenant entre autres un peroxyde de benzoyle comme agent oxydant et un plastifiant.

Il existe un besoin pour de nouvelles compositions (méth)acryliques permettant de résoudre au moins en partie au moins l'un des inconvénients susmentionnés.

Plus particulièrement, il existe un besoin pour de nouvelles compositions (méth)acryliques permettant de diminuer l'inhibition due à l'oxygène de l'air, et de notamment conduire à des surfaces réticulées non collantes (« tack-free »).

Il existe également un besoin pour de nouvelles compositions permettant un contrôle du temps ouvert selon l'application visée. Des applications de collage sur de larges pièces telles que des éoliennes, nécessitent d'avoir des compositions présentant un temps ouvert long, tandis que des collages de petites pièces en électronique peuvent nécessiter au contraire des temps ouverts très court.

Le temps ouvert est notamment le temps maximum entre l'application de la composition adhésive sur un substrat, et l'affichage des deux substrats à coller, sans dégradation du pouvoir collant.

### DESCRIPTION DE L'INVENTION

### A. Composition

La présente invention concerne une composition bi-composante réticulable comprenant :
- un composant A comprenant :
   ∘ un monomère (méth)acrylate ;
   ∘ un agent réducteur ;
   ∘ un sel de zinc choisi parmi les alcane sulfonates de zinc, l'acétate de zinc, et leurs mélanges ;
- un composant B comprenant un agent oxydant.

### Monomère (méth)acrylate

Les monomères (méth)acrylate peuvent comprendre une (monofonctionnel) ou plusieurs fonctions (méth)acrylate (polyfonctionnel).

Les monomères (méth)acrylate(s) peuvent être choisis dans le groupe constitué :
- des composés ayant la formule (A) suivante :

   CH₂=C(R^{a})-COOR^{b} (A)

   dans laquelle :
   - R^{a} représente un atome d'hydrogène ou un groupe alkyle comprenant de 1 à 4 atomes de carbone ;
   - R^{b} est choisi dans le groupe constitué des alkyles, des cycloalkyles, des alcényles, des cycloalcényles, des alkylaryles, des arylalkyles ou des aryles, lesdits alkyles, des cycloalkyles, des alcényles, des cycloalcényles, des alkylaryles, des arylalkyles ou des aryles pouvant être éventuellement substitués et/ou interrompus par au moins un silane, un silicone, un oxygène, un halogène, un carbonyle, un hydroxyle, un ester, une urée, un uréthane, un carbonate, une amine, une amide, un soufre, un sulfonate, ou un sulfone ;
   - des polyéthylène glycol di(méth)acrylates ;
   - des polypropylène glycol di(méth)acrylates ;
   - des tétrahydrofurane (méth)acrylates ;
   - des hydroxyalkyl(méth)acrylate tels que par exemple l'hydroxypropyl(méth)acrylate ou l'hydroxyéthyl(méth)acrylate ;
   - de l'hexanediol di(méth)acrylate ;
   - du triméthylol propane tri(méth)acrylate ;
   - du diéthylèneglycol di(méth)acrylate ;
   - du triéthylène glycol di(méth)acrylate ;
   - du tétraéthylène glycol di(méth)acrylate ;
   - du dipropylène glycol di(méth)acrylate ;
   - du di-(pentaméthylène glycol di(méth)acrylate ;
   - du diglycérol tétra(méth)acrylate ;
   - du tétraméthylène di(méth)acrylate ;
   - de l'éthylène di(méth)acrylate ;
   - des bisphénol A mono- et di(méth)acrylates ;
   - des bisphénol F mono- et di(méth)acrylates; et
   - de leurs mélanges.

Selon un mode de réalisation, le monomère (méth)acrylate est choisi parmi le (méth)acrylate de méthyle, le (méth)acrylate d'éthyle, le (méth)acrylate de 2-éthylhexyle, le (méth)acrylate d'heptyle, le (méth)acrylate de 2-tert-butylheptyle, le (méth)acrylate d'octyle, le (méth)acrylate de 3-isopropylheptyle, le (méth)acrylate de nonyle, le (méth)acrylate de décyle, le (méth)acrylate d'undécyle, le (méth)acrylate de 5-méthylundécyle, le (méth)acrylate de dodécyle, le (méth)acrylate de 2-méthyldodécyle, le (méth)acrylate de tridécyle, le (méth)acrylate de 5-méthyltridécyl, le (méth)acrylate de tétradécyle, le (méth)acrylate de pentadécyle, le (méth)acrylate d'hexadécyle, le (méth)acrylate de 2-méthylhexadécyle, le (méth)acrylate d'heptadécyl, le (méth)acrylate de 5-isopropylheptadécyle, le (méth)acrylate de 4-tert-butyloctadécyle, le (méth)acrylate de 5-éthyloctadécyle, le (méth)acrylate de 3-isopropyloctadécyle, le (méth)acrylate d'octadécyle, le (méth)acrylate de nonadécyle, le (méth)acrylate d'eicosyle, le (méth)acrylate de 3-vinylcyclohexyle, le (métha)crylate de bornyle, le (méth)acrylate de 2,4,5-tri-t-butyl-3-vinylcyclohexyle, le (méth)acrylate de 2,3,4,5-tétra-t-butylcyclohexyle; le (méth)acrylate de benzyle, le (méth)acrylate de phényle, le 2-(2-éthoxyéthoxy)éthyl (méth)acrylate, le (méth)acrylate de 2-phénoxyéthyle, et leurs mélanges.

De préférence, le monomère (méth)acrylate est un méthacrylate.

De préférence, le monomère (méth)acrylate est le méthacrylate de méthyle.

Le composant A peut comprendre une teneur totale en monomère(s) (méth)acrylate allant de 20 % à 80 %, de préférence de 30 % à 70 %, avantageusement de 40 % à 60 % en poids par rapport au poids total dudit composant A.

### Agent réducteur

L'agent réducteur peut être choisi parmi les amines tertiaires, le sodium métabisulfite, le sodium bisulfite, les métaux de transition, les composés azo, les alpha-aminosulfones, et leurs mélanges.

Parmi les composés azo, on peut par exemple citer l'acide azoisobutyrique.

Parmi les alpha-sulfones, on peut par exemple citer la bis(tolylsulfonméthyl)benzylamine.

Parmi les amines tertiaires, on peut par exemple citer la diisopropanol-p-toluidine (DIIPT) ; la diméthyl-p-toluidine ; la dipropoxy-p-toluidine ; la diméthylaniline ; la N,N-diméthylaminométhylphénol ; la N,N-diisopropanol-p-chloroaniline; la N,N-diisopropanol-p-bromoaniline; la N,N-diisopropanol-p-bromo-m-methylaniline; la N,N-diméthyl-p-chloroaniline; la N,N-diméthyl-p-bromoaniline; la N,N-diéthyl-p-chloroaniline; la N,N-diéthyl-p-bromoaniline ; les amines ayant les formules (I) ou (II) suivantes ; et leurs mélanges : 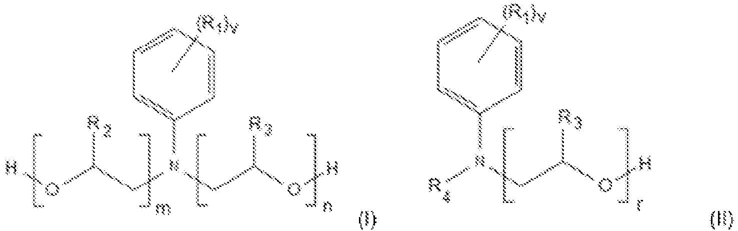 dans lesquelles :
- m et n sont, indépendamment l'un de l'autre, un nombre entier allant de 1 à 150, de préférence de 1 à 100, préférentiellement de 1 à 72, avantageusement de 1 à 36, encore plus avantageusement de 1 à 18;
- r est un nombre entier allant de 1 à 200, de préférence de 1 à 104, préférentiellement de 1 à 72, avantageusement de 1 à 36 ;
- R₁ représente un radical choisi dans le groupe constitué d'un alkyle, linéaire ou ramifié, saturé ou insaturé, comprenant de 1 à 20 atomes de carbone, de préférence de 1 à 10 atomes de carbone ; d'un (hétéro)aryle comprenant de 6 à 12 atomes de carbone ; d'un cycloalkyle comprenant de 3 à 12 atomes de carbone ;
- v représente un nombre entier allant de 0 à 5 ;
- R₂ et R₃ représentent, indépendamment l'un de l'autre, un atome d'halogène, un atome d'hydrogène ou un groupe alkyle, linéaire ou ramifié, comprenant de 1 à 12 atomes de carbone, ledit groupe alkyle étant éventuellement interrompu par au moins un atome d'oxygène ;
- R₄ représente un atome d'hydrogène, un groupe arylalkyle, ou un groupe alkyle, linéaire ou ramifié, comprenant de 1 à 20 atomes de carbone, de préférence un groupe alkyle comprenant de 1 à 12 atomes de carbone, avantageusement de 1 à 6 atomes de carbone ;
- à condition que m + n > 2, de préférence n + m ≥ 2,5.

Dans la formule (I) susmentionnée, v vaut de préférence 1, et R¹ est de préférence en position para.

Les amines de formule (I) sont de préférence choisies parmi celles dans lesquelles :
- R¹ représente un alkyle, linéaire ou ramifié, saturé ou insaturé, comprenant de 1 à 20 atomes de carbone, de préférence de 1 à 10 atomes de carbone, préférentiellement R¹ représente méthyle ;
- m et n représentent, indépendamment l'un de l'autre, un nombre entier allant de 1 à 18, de préférence de 1 à 9, avantageusement de 1 à 5 ;
- R² et R³ représentent, indépendamment l'un de l'autre, un atome d'hydrogène ou un groupe alkyle, linéaire ou ramifié, comprenant de 1 à 12 atomes de carbone, ledit groupe alkyle étant éventuellement interrompu par au moins un atome d'oxygène, de préférence R² et R³ représente chacun un atome d'hydrogène ;
- avec m + n > 2, de préférence n + m ≥ 2,5.

De préférence, les amines de formule (I) sont celles dans lesquelles :
- R¹ représente un alkyle, linéaire ou ramifié, comprenant de 1 à 5 atomes de carbone, préférentiellement R¹ représente méthyle ;
- m et n représentent, indépendamment l'un de l'autre, un nombre entier allant de 1 à 18, de préférence de 1 à 9, avantageusement de 1 à 5 ;
- R² et R³ représentent un atome d'hydrogène ;
- avec que m + n > 2, de préférence n + m ≥ 2,5.

Parmi les amines de formule (I), on peut par exemple citer la « BISOMER^{®} PTE » (numéro CAS: 878391-30-1) commercialisée par GEO SPECIALITY CHEMICALS, le « Accelerator PT25E » (numéro CAS : 878391-30-1) commercialisé par LANXESS, la N,N-Bis(2-hydroxypropyl)-p-aniline (numéro CAS : 3077-13-2) disponible chez BIOSYNTH, la N,N-Bis(2-hydroxypropyl)-p-toluidine (numéro CAS : 38668-48-3) commercialisée par BASF, le « ETHOX ANA-10 » (numéro CAS : 36356-83-9) disponible chez ETHOX CHEMICAL.

Dans la formule (II) susmentionnée, v vaut de préférence 1, et R¹ est de préférence en position para.

Les amines de formule (II) sont de préférence choisies parmi celles dans lesquelles :
- R¹ représente un alkyle, linéaire ou ramifié, saturé ou insaturé, comprenant de 1 à 20 atomes de carbone, de préférence de 1 à 10 atomes de carbone, préférentiellement R¹ représente méthyle ;
- r représente un nombre entier allant de 1 à 36, de préférence de 1 à 18, avantageusement de 1 à 10 ;
- R³ représente un atome d'halogène, un atome d'hydrogène ou un groupe alkyle, linéaire ou ramifié, comprenant de 1 à 12 atomes de carbone, ledit groupe alkyle étant éventuellement interrompu par au moins un atome d'oxygène,
- R⁴ représente un atome d'hydrogène, un groupe arylalkyle, ou un groupe alkyle, linéaire ou ramifié, comprenant de 1 à 20 atomes de carbone, de préférence de 1 à 6 atomes de carbone.

Parmi les amines de formule (II), on peut par exemple citer la N-(2-hydroxyéthyl)-N-méthyl aniline (numéro CAS : 93-90-3) disponible chez SIGMA-ALDRICH et la N-(2-hydroxyéthyl)-N-méthyl-p-toluidine (MHPT, numéro CAS : 2842-44-6) disponible chez PARCHEM.

De préférence, le composant A comprend au moins une amine tertiaire comme agent réducteur, et encore plus préférentiellement une amine de formule (I) susmentionnée.

Le composant A peut comprendre une teneur totale en agent(s) réducteur(s) allant de 0,1% à 5%, de préférence de 0,5% à 3%, en poids par rapport au poids total dudit composant A.

### Agent oxydant

L'agent oxydant peut être choisi parmi les peroxydes, les sels organiques de métaux de transition, les composés contenant un chlore labile, et leurs mélanges.

Le peroxyde peut être choisi parmi les peroxydes organiques, les peroxydes inorganiques, et leurs mélanges.

Parmi les peroxydes inorganiques, on peut citer l'acide peroxydisulfurique et leurs sels, tels que le peroxodisulfate d'ammonium, le peroxodisulfate de sodium et le peroxodisulfate de potassium.

Parmi les peroxides oganiques, on peut citer l'hydroperoxyde de cumène, l'hydroperoxyde de para-menthane, le peroxyisobutyrate de tert-butyle, le peroxybenzoate de tert-butyle, le peroxynéodécanoate de tert-butyle, le peroxypivalate de tert-amyle, le peroxyde d'acétyle, le peroxyde de benzoyle, le peroxyde de dibenzoyle, le 1,3-bis-(t-butylperoxyisopropyl)benzène, le diacétyl peroxyde, le t-butylcumyl peroxyde, le peroxyacétate de tert-butyle, le peroxyde de cumyle, le 2,5-diméthyl-2,5-di-t-butylperoxyhexane, le 2,5-diméthyl-2,5-di-t-butyl-peroxyhex-3-yne, le 4-méthyl-2,2-di-t-butylperoxypentane, et leurs mélanges.

De préférence, le composant B comprend le peroxyde de benzoyle comme agent oxydant.

Le composant B peut comprendre une teneur totale en agent(s) oxydant(s) allant de 1% à 50%, de préférence de 10% à 40% en poids par rapport au poids total dudit composant B.

La composition selon l'invention peut typiquement comprendre un système rédox, un agent réducteur étant compris dans le composant A et un agent oxydant étant compris dans le composant B. On peut par exemple citer les combinaisons suivantes :
- persulfates (oxydant) / (sodium metabisulfite et/ ou sodium bisulfite) (réducteurs) ;
- peroxydes organiques (oxydant) / amines tertiaires (réducteur) ;
- hydroperoxydes organiques (oxydant) / métaux de transitions (réducteur).

### Sels de zinc

Le composant A comprend un sel de zinc choisi parmi les alcane sulfonates de zinc, l'acétate de zinc, et leurs mélanges.

Le sel de zinc couvre également les sels de zinc hydratés.

Dans le cadre de l'invention, et sauf mention contraire, on entend par alcane sulfonates, des sulfonates aliphatiques.

Les alcane sulfonates de zinc peuvent avoir l'une des formules (III) ou (IV) suivantes :

(R'-SO₃)₂⁻, Zn²⁺ (III)

(OH-R"-SO₃)₂⁻, Zn²⁺ (IV)

dans lesquelles R' représente un radical hydrocarboné, linéaire ou ramifié, comprenant de 1 à 18 atomes de carbone, et R" représente un radical hydrocarboné, linéaire ou ramifié, comprenant de 2 à 18 atomes de carbone.

De préférence, dans la formule (IV), R" représente un alkyle linéaire ou ramifié comprenant de 2 à 18 atomes de carbone, de préférence de 2 à 6 atomes de carbone, et encore plus préférentiellement de 2 à 4 atomes de carbone.

Selon un mode de réalisation préféré, dans la formule (III) susmentionnée, R' représente un alkyle ramifié ou linéaire comprenant de 1 à 18 atomes de carbone, de préférence de 1 à 6 atomes de carbone, et encore plus préférentiellement un atome de carbone.

Parmi les alcane sulfonates de formule (III), on peut par exemple citer le méthane sulfonate de zinc (R' = Méthyl), le dodécane sulfonate de zinc (R' = C12), ou l'octadécane sulfonate de zinc (R'= C18), l'alcane sulfonate de zinc étant préférentiellement le méthane sulfonate de zinc.

Les alcane sulfonates de zinc sont typiquement commercialement disponibles.

Selon un mode de réalisation préféré, le composant A comprend un sel de zinc étant le zinc acétate dihydrate.

Le composant A peut comprendre une teneur totale en sel(s) de zinc tel que défini ci-dessus allant de 0,1% à 10%, de préférence de 0,5% à 5%, et encore plus préférentiellement de 0,5% à 2% en poids par rapport au poids total dudit composant A.

### Ingrédients additionnels

La composition bi-composante peut comprendre au moins un ingrédient additionnel choisi dans le groupe constitué des catalyseurs, des charges, des antioxydants, des stabilisants à la lumière/ absorbeurs d'UV, des désactivateurs de métaux, des antistatiques, des agents antivoile, des agents moussants, des biocides, des plastifiants, des lubrifiants, des émulsifiants, des colorants, des pigments, des agents rhéologiques, des modificateurs d'impact, des promoteurs d'adhésion, des azurants optiques, des ignifugeants, des agents anti-suintement, des agents de nucléation, des solvants, et de leurs mélanges.

Ces ingrédients peuvent être présents dans le composant A et/ou le composant B de la composition selon l'invention.

A titre d'exemple d'agent plastifiant utilisable, on peut citer n'importe quel agent plastifiant habituellement utilisé dans le domaine des adhésifs tels que par exemple les résines époxy, les phtalates, les benzoates, les esters de trimethylolpropane, les esters de triméthyloléthane, les esters de triméthylolméthane, les esters de glycérol, les esters de pentaerythritol, les huiles minérales napthéniques, les adipates, les cyclohexyldicarboxylates, les huiles paraffiniques, les huiles naturelles (éventuellement époxydées), les polypropylènes, les polybutylènes, les polyisoprènes hydrogénés, et leurs mélanges.

De préférence, on utilise :
- le diisodecyl phtalate, tel que par exemple commercialisé sous le nom PALATINOL^{™} DIDP par la Société BASF,
- un ester d'acide alkylsulphonique et de phénol, tel que par exemple commercialisé sous le nom MESAMOLL^{®} par la société LANXESS,
- le diisononyl-1,2-cyclohexanedicarboxylate, tel que par exemple commercialisé sous le nom HEXAMOLL DINCH^{®} par la société BASF,
- le tétravalérate de pentaérythritol, tel que par exemple commercialisé sous le nom PEVALEN^{™} par la Société PERSTORP,
- l'huile de Soja époxydée tel que par exemple commercialisée sous le nom VIKOFLEX^{®} 7170 par la Société ARKEMA.

A titre d'exemple d'agent(s) de rhéologie (thixotropiques) utilisable(s), on peut citer n'importe quel agent de rhéologie habituellement utilisé dans le domaine des compositions adhésives.

De préférence, les agents thixotropiques sont choisis parmi :
- les plastisols de PVC, correspondant à une suspension de PVC dans un agent plastifiant miscible avec le PVC, obtenue in situ par chauffage à des températures allant de 60°C à 80°C. Ces plastisols peuvent être ceux décrits notamment dans l'ouvrage « Polyurethane Sealants », Robert M. Evans, ISBN 087762-998-6,
- la silice pyrogénée, telle que par exemple vendu sous la dénomination HDK^{®} N20 par la société Wacker ;
- des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172 ;
- les cires d'amides micronisées, telles que le CRAYVALLAC SLT commercialisé par Arkema.

La composition selon l'invention peut comprendre en outre au moins une charge organique et/ou minérale.

La (ou les) charge(s) minérale(s) utilisable(s) est (sont) avantageusement choisie(s) de manière à améliorer les performances mécaniques de la composition selon l'invention à l'état réticulée.

A titre d'exemple de charge(s) minérale(s) utilisable(s), on peut utiliser n'importe quelle(s) charge(s) minérale(s) habituellement utilisée(s) dans le domaine des compositions adhésives. Ces charges se présentent typiquement sous la forme de particules de géométrie diverse. Elles peuvent être par exemples sphériques, fibreuses, ou présenter une forme irrégulière.

De préférence, la(les) charge(s) est(sont) choisie(s) dans le groupe constitué de l'argile, du quartz, des charges carbonatées, du kaolin, du gypse, des argiles, et de leurs mélanges, préférentiellement la(les) charge(s) est(sont) choisie(s) parmi les charges carbonatées, telles que les carbonates de métaux alcalin ou alcalino-terreux, et plus préférentiellement le carbonate de calcium ou la craie.

Ces charges peuvent être non traitée ou traitées, par exemple à l'aide d'un acide organique tel que l'acide stéarique, ou d'un mélange d'acides organiques constitué majoritairement d'acide stéarique.

On peut utiliser également des microsphères creuses minérales telles que des microsphères creuses de verre, et plus particulièrement celles en borosilicate de sodium et de calcium ou en aluminosilicate.

La composition selon l'invention peut en outre comprendre au moins un promoteur d'adhésion, de préférence choisi parmi les silanes, tels que les aminosilanes, les époxysilanes ou les acryloyl silanes, ou les promoteurs d'adhésion à base d'ester de phosphate tel que par exemple l'ester phosphate 2-hydroxyéthyl de méthacrylate, le 2-méthacryloyloxyethyl phosphate, le bis-(2-méthacryloyloxyethyl phosphate), le 2-acryloyloxyethyl phosphate, le bis-(2-acryloyloxyethyl phosphate), le méthyl-(2-méthacryloyloxyethyl phosphate), l'éthyl-(2-méthacryloyloxyethyl phosphate), un mélange d'esters mono and di-phosphate de 2-hydroxyéthyl de méthacrylate. La composition peut comprendre de 0% à 5% en poids total de promoteur(s) d'adhésion.

Lorsqu'un solvant, en particulier un solvant volatil, est présent dans la composition, sa teneur est de préférence inférieure ou égale à 5% en poids, de préférence encore inférieure ou égale à 3% en poids, par rapport au poids total de la composition.

De préférence, la teneur en solvant(s) dans la composition est comprise entre 0% et 5% en poids.

Lorsqu'un pigment est présent dans la composition, sa teneur est de préférence inférieure ou égale à 3% en poids, de préférence encore inférieure ou égale à 2% en poids, par rapport au poids total de la composition. Lorsqu'il est présent, le pigment peut par exemple représenter de 0,1% à 3% en poids ou de 0,4% à 2% en poids du poids total de la composition.

Les pigments peuvent être des pigments organiques ou inorganiques.

Par exemple, le pigment est TiO₂, en particulier le KRONOS^{®} 2059 commercialisé par la société KRONOS.

La composition peut comprendre une quantité de 0,1% à 3%, de préférence de 1% à 3% en poids, d'au moins un stabilisant UV ou antioxydant. Ces composés sont typiquement introduits pour protéger la composition d'une dégradation résultant d'une réaction avec de l'oxygène qui est susceptible de se former par action de la chaleur ou de la lumière. Ces composés peuvent inclure des antioxydants primaires qui piègent les radicaux libres. Les antioxydants primaires peuvent être utilisés seuls ou en combinaison avec d'autres antioxydants secondaires ou des stabilisants UV. On peut par exemple citer l'IRGANOX ^{®} 1010, l'IRGANOX ^{®} B561, l'IRGANOX ^{®} 245, l'IRGAFOS ^{®} 168, TINUVIN^{®} 328 ou TINUVIN^{™} 770 commercialisés par BASF.

La composition peut comprendre au moins un copolymère à blocs acryliques. Les copolymères à blocs acryliques sont typiquement des modificateurs d'impact.

Les copolymères à blocs acryliques peuvent être des copolymères comprenant :
- de 1% à 99% d'au moins un bloc rigide (A) dont la température de transition vitreuse est supérieure à la température ambiante d'au moins 20°C ;
- de 1 à 99% en poids d'au moins un bloc souple (B) dont la température de transition vitreuse est inférieure à la température ambiante d'au moins 10°C.

Les copolymères peuvent notamment être des triblocs à blocs rigide / bloc souple / bloc rigide, dans lesquels :
- au moins un bloc rigide (A) du copolymère est avantageusement constitué d'unités monomères issues d'au moins un méthacrylate de formule CH₂=C(CH₃)-COORᵢ où Rᵢ est un groupe alkyle linéaire ou ramifié en C1-C3, un groupe ramifié en C4, un groupe cycloalkyle en C3-C8, un groupe aryle en C6-C20, un groupe arylalkyle en C7-C30 renfermant un groupe alkyle en C1-C4, un groupe hétérocyclique ou un groupe hétérocyclylalkyle renfermant un groupe alkyle en C1-C4 ; et
- le bloc souple (B) renferme avantageusement:
   (i) des unités monomériques issues d'au moins un acrylate d'alkyle de formule CH₂=CH-COORⱼ où Rⱼ est un groupe alkyle linéaire ou ramifié en C1-C12, et/ou
   (ii) des unités monomériques issues d'au moins un méthacrylate de formule CH₂=C (CH₃)-COORₖ où Rₖ est un groupe alkyle linéaire en C4-C12 ou un groupe alkyle ramifié en C5- C12.

Le bloc rigide (A) comprend de préférence des unités monomériques issues de monomères méthacrylate de méthyle.

Le bloc rigide (A) peut comprendre en outre au moins un monomère dialkylacrylamide dont les groupes alkyles, linéaires ou ramifiés, comprennent de 1 à 10 atomes de carbone, tels que le N,N-diméthylacrylamide.

Le bloc souple (B) comprend de préférence des unités monomériques issues d'au moins un monomère choisi parmi l'acrylate de butyle, l'acrylate de 2-éthylehexyle, l'acrylate d'hydroxyéthyle, le méthacrylate de 2-éthylhexyle, l'acrylate de n-octyle et leurs mélanges.

Préférentiellement, le copolymère est un copolymère à blocs polyméthacrylate de méthyle/polyacrylate de n-butyle/polyméthacrylate de méthyle.

Parmi les copolymères à blocs acryliques, on peut par exemple citer les Nanostrength^{®} commercialisés par Arkema (M52 comprenant 52% en poids de polyacrylate de n-butyle, ou le M75 comprenant environ 75% en poids de polyacrylate de n-butyle ou le M65 comprenant environ 65% en poids de polyacrylate de n-butyle).

La composition peut comprendre un modificateur d'impact ayant une structure de type coeur-écorce, typiquement connu sous la désignation anglaise « core-shell impact modifier ». Les modificateurs d'impact sont bien connus de l'homme du métier, et comprennent notamment les modificateurs d'impact ayant une structure de type coeur-écorce.

Le modificateur d'impact ayant une structure de type coeur-écorce peut être sous forme de particules sphériques. La taille de particules moyenne en poids (diamètre) peut aller de 40 nm à 900 nm, de préférence de 80 à 500 nm. La taille des particules peut être mesurée avec un Zetasizer (Malvern).

Le modificateur d'impact ayant une structure de type coeur-écorce peut être obtenu par tout procédé connu de l'homme du métier, par exemple par un procédé à étapes multiples tel que décrit dans FR 3 052 169 ou dans EP 2 465 884. En particulier, le polymère est préparé par polymérisation en émulsion.

Le coeur du modificateur d'impact peut comprendre un polymère L1 choisi parmi les homopolymères d'isoprène, les homopolymères de butadiène, les copolymères d'isoprène-butadiène, les copolymères d'isoprène avec un monomère vinylique, les copolymères de butadiène avec un monomère vinylique. Le monomère vinylique peut être choisi parmi le styrène, les alkylstyrène, l'acrylonitrile, les (méth)acrylates d'alkyle, le butadiène ou l'isoprène.

L'écorce peut comprendre un polymère L2 obtenu à partir de monomères (méth)acryliques tels que par exemple ceux choisis parmi les (méth)acrylates d'alkyle en C1-C12. En particulier, l'écorce comprend un polymère L2 obtenu à partir de monomères de méthacrylate d'alkyle en C1-C4 et/ou des monomères d'acrylate d'alkyle en C1-C8.

De manière préférée, l'écorce comprend un polymère L2 obtenu à partir d'acrylate de méthyle, d'acrylate de propyle, d'acrylate d'isopropyle, d'acrylate de butyle, de méthacrylate de méthyle, de méthacrylate d'éthyle, de méthacrylate de butyle, et de leurs mélanges.

Selon un mode de réalisation, le modificateur d'impact ayant une structure de type coeur-écorce comprend :
- un coeur comprenant un polymère L1 étant un copolymère butadiène-styrène ;
une écorce comprenant un polymère L2 étant un polyméthacrylate de méthyle (PMMA).

Les modificateurs d'impact ayant une structure de type coeur-écorce peuvent être commercialement disponibles. On peut par exemple citer le Clearstrength^{®} (par exemple Clearstrength^{®} XT100) ou les Durastrength^{®} commercialisés par Arkema. On peut également citer les Paraloid (Paraloid 2650A, Paraloid 2691A) commercialisés par Dow Corning.

La teneur totale en modificateur(s) d'impact dans le composant A peut aller de 2 % à 30 % en poids, de préférence de 5% à 20% en poids par rapport au poids total du composant A.

La composition peut comprendre au moins un uréthane-acrylate ayant une masse moléculaire moyenne en nombre supérieure ou égale à 2 000 g/mol, préférentiellement supérieure ou égale à 4000 g/mol.

Les uréthane-acrylate peuvent être obtenus par réaction entre un polyol avec un polyisocyanate, suivie d'une fonctionnalisation avec par exemple l'hydroxyméthyl méthacrylate.

Il existe de nombreux uréthane-acrylate commercialement disponibles.

Selon un mode de réalisation, le ratio volumique composant A/composant B dans la composition de l'invention va de 100/5 à 1/1, de préférence de 20/1 à 1/1, préférentiellement de 10/1 à 1/1.

Selon un mode de réalisation préféré, la composition susmentionnée comprend :
- un composant A comprenant :
   - de 20 % à 80 % en poids de monomère(s) (méth)acrylate ;
   - de 0,1 % à 5 % en poids d'agent(s) réducteur(s) ;
   - de 0,1% à 10% en poids de sel(s) de zinc tel que défini précédemment,
      choisi parmi les alcane sulfonates de zinc, l'acétate de zinc, et leurs mélanges ;
   - de 2% à 30% en poids de modificateur(s) d'impact de type coeur-écorce ;
   - de 0% à 40% en poids de composé(s) uréthane-acrylate ;
   par rapport au poids total dudit composant A ;
- une composant B comprenant :
   - de 1% à 50 % en poids d'agent(s) oxydant(s); et
   - de 20% à 80% en poids de plastifiant(s) ;
par rapport au poids total dudit composant B.

De préférence, la composition selon l'invention est une composition adhésive.

### Kit prêt à l'emploi

La présente invention concerne également un kit prêt à l'emploi, comprenant le composant A tel que défini ci-dessus d'une part et le composant B tel que défini ci-dessus d'autre part, conditionnés dans deux compartiments séparés. Il peut par exemple s'agir d'une cartouche bicomposante.

En effet, la composition selon l'invention peut se trouver sous une forme bicomposante, par exemple au sein d'un kit prêt à l'emploi, comprenant le composant A d'une part dans un premier compartiment ou fût et le composant B d'autre part dans un second compartiment ou fût, dans des proportions adaptées pour un mélange direct des deux composants, par exemple à l'aide d'une pompe doseuse.

Selon un mode de réalisation de l'invention, le kit comprend en outre un ou plusieurs moyens permettant le mélange des composants A et B. De préférence, les moyens de mélange sont choisis parmi des pompes doseuses, des mélangeurs statiques de diamètre adapté aux quantités utilisées.

### Utilisations des compositions

La présente invention concerne également l'utilisation d'une composition telle que définie ci-dessus, comme adhésif, mastic ou revêtement, de préférence comme adhésif.

L'invention concerne également l'utilisation de ladite composition pour la réparation et/ou le collage structural ou semi-structural de matériaux dans le domaine du transport, automobile (voiture, bus ou camion), de l'électronique, de l'assemblage, de l'éolien, de la marine, ou de la construction.

La présente invention concerne également un procédé d'assemblage de deux substrats par collage, comprenant :
- l'enduction sur au moins un des deux substrats à assembler d'une composition obtenue par mélange des composants A et B tels que définis précédemment ; puis
- la mise en contact effective des deux substrats ;
- la réticulation de la composition.

L'étape de réticulation peut être mise en oeuvre à une température comprise entre 0°C et 200°C, de préférence entre 10°C et 150°C, de préférence entre 23 et 80°C et en particulier entre 20°C et 25°C.

Les substrats appropriés sont, par exemple, des substrats inorganiques tels que le béton, les métaux ou les alliages (comme les alliages d'aluminium, l'acier, les métaux non-ferreux et les métaux galvanisés) ; ou bien des substrats organiques comme le bois, des plastiques comme le PVC, le polycarbonate, le PMMA, le polyéthylène, le polypropylène, les polyesters, les résines époxy ; les substrats en métal et les composites revêtus de peinture.

Les compositions selon l'invention permettent avantageusement une polymérisation qui s'opère en surface et en profondeur. En outre, la surface des compositions réticulées sèches rapidement et ne sont pas « tacky », ce qui permet avantageusement d'augmenter la productivité des procédés industriels et l'aspect des collages en limitant l'incorporation de poussières.

Les compositions selon l'invention présentent avantageusement, après réticulation, de bonnes propriétés adhésives.

En outre, l'utilisation de sel de zinc dans les compositions selon l'invention permet avantageusement de contrôler le temps ouvert selon l'application visée. Par exemple, l'utilisation de carboxylate de zinc selon l'invention permet avantageusement de réduire le temps ouvert et donc d'accélérer la réaction.

Tous les modes de réalisation décrits ci-dessus peuvent être combinés les uns avec les autres. En particulier, les différents constituants susmentionnés de la composition, et notamment les modes préférés, de la composition peuvent être combinés les uns avec les autres.

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

L'invention est à présent décrite dans les exemples de réalisation suivants qui sont donnés à titre purement illustratif, et ne sauraient être interprétés pour en limiter la portée.

### EXEMPLES

Les ingrédients suivants ont été utilisés :
- BISOMER^{®} PTE (CAS Number : 103671-44-9) commercialisée par GEO Specialty Chemicals ;
- méthyl méthacrylate (MMA) commercialisé par Aldrich ;
- MBS CLEARSTRENGTH^{®} XT100 commercialisé par ARKEMA est un modificateur d'impact coeur-écorce sur base MMA-butadiène-styrène ;
- CN^{®}981 commercialisé par SARTOMER est un uréthane-acrylate de fonctionnalité 2 et Mw de 2000 g/mol ;
- Zinc méthane sulfonate (CAS 33684-80-9) commercialisé par ALDRICH ;
- Valikat^{®} ZN 1910 commercialisé par UMICORE est un néodécanoate de zinc(ll) ;
- Zinc acétate dihydrate (CAS 5970-45-6) commercialisé par ALDRICH ;
- Acide méthacrylique commercialisé par ALDRICH ;
- SR9054 (CAS N° : 1628778-81-3) commercialisé par SARTOMER est un mélange de méthacrylates comprenant des fonctions acide phosphonique ;
- HDK^{®} N20 commercialisé par WACKER est une silice pyrogénée ;
- TALCRON^{®} CL40 commercialisé par MINERALS GIRONA est une hydrosilicate de magnésium ;
- PEROXAN^{™} BP 50 commercialisé par PERGAN est une pâte de peroxyde de benzoyle à 50% ;
- CRAYVALLAC^{®} SLT commercialisée par ARKEMA est une cire micronisée d'amide utilisée comme agent rhéologique ;
- VIKOFLEX^{®} 7170 commercialisée par ARKEMA est une huile de Soja époxydée utilisée comme plastifiant.

### Exemple 1 : préparation des compositions

Dans un réacteur maintenu sous agitation constante et sous azote, les ingrédients constituant le composant A sont ajoutés dans les proportions indiquées dans le tableau suivant à une température de 23°C.

Dans un réacteur maintenu sous agitation constante et sous azote, les différents ingrédients constituant le composant B sont mélangés dans les proportions indiquées dans le tableau suivant à une température de 23°C.

| **Compositions n°1 à 3** | | | | | |
|---|---|---|---|---|---|
| **Composant A** | | | **Composant B** | | |
| **ingrédients** | **% en poids (par rapport au poids total de A)** | | **ingrédients** | **% en poids (par rapport au poids total de B)** | |
| **MMA** | 44,33 | | **PEROXAN^{™} BPO** | 35 | |
| **Clearstength^{®} XT100** | 10 | | **VIKOFLEX^{®} 7170** | 62 | |
| **CN981** | 27,8 | | **CRAYVALLAC^{®} SLT** | 10 | |
| **acide méthacrylique** | 1,11 | | | | |
| **SR9054** | 2,22 | | | | |
| **HDK^{®} N20** | 5,55 | | | | |
| **Crayvallac^{®} SLT** | 3,55 | | | | |
| **Talkron^{®} CL40** | 3,22 | | | | |
| **Bisomer^{®} PTE** | 1,11 | | | | |
| **Sel de zinc*** | 1,11 | | | | |
| | **100%** | | | **100%** | |

Trois compositions différentes ont été préparées avec différents sels de zinc :

| **Sel de zinc** | |
|---|---|
| Zinc acétate dihydrate | Composition n°1 |
| VALIKAT^{®} ZN 1910 | Composition n°2 |
| Zinc méthane sulfonate | Composition n°3 |

Le mélange est effectué à une température de 23°C environ, selon un ratio volumique 10 : 1 (composant A : composant B) avec un mélangeur statique.

### Exemple 2 : Résultats

### Test de température et temps de polymérisation après mélange des composant A et B

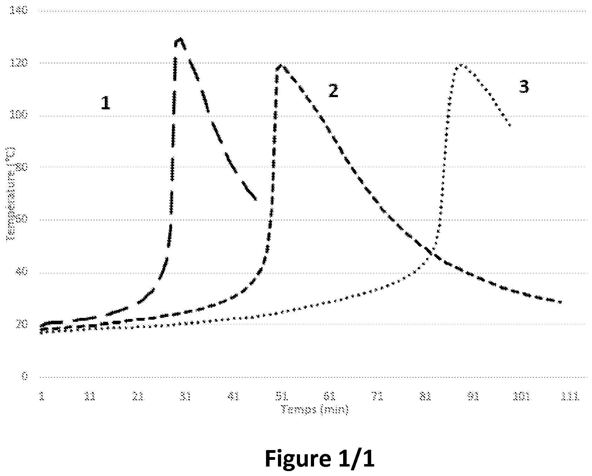

La figure 1 représente la température T(en °C) = f(temps en minute) qui a été obtenu avec les compositions n°1, n°2 et n°3 (respectivement courbes 1, 2 et 3). Le test est réalisé à l'aide d'un thermocouple sacrificiel dans un volume de mélange de 30 ml. Ce test permet de déterminer l'exothermicité de la réaction et le temps de latence, c'est-à-dire le temps qu'il faut à l'échantillon pour commencer à polymériser. Ce temps est le temps de gel.

La figure 1 montre que la composition n°1 avec le zinc acétate dihydrate conduit à un exotherme (pic de température) en un temps court de l'ordre de 30 minutes, alors qu'il est de plus de 90 minute avec la composition n°3. Ainsi, pour une même composition, on peut jouer sur le temps ouvert selon l'application souhaitée, en modifiant la nature du sel de zinc. La composition n°3, avec un temps ouvert long, permettrait d'être utilisée avantageusement dans le domaine éolien où les larges pâles nécessitent un temps ouvert d'une à deux heures minimum pour réaliser les collages de telles pièces.

### Résultat d'inhibition

L'l'inhibition de la colle est observée par contact avec la surface du mélange bicomposant qui doit être sèche, sans collant, à l'aide d'un abaisse langue ou de bandelette de papier. En terme d'inhibition, le tableau suivant regroupe les résultats avec les compositions n°1, n°2 et n°3 :

| Composition n° | résultats |
|---|---|
| 1 | ++ |
| 2 | + |
| 3 | + |

## Revendications

1. Composition bi-composante réticulable comprenant :
- un composant A comprenant :
∘ un monomère (méth)acrylate ;
∘ un agent réducteur ;
∘ un sel de zinc choisi parmi les alcane sulfonates de zinc, l'acétate de zinc, et leurs mélanges ;
- un composant B comprenant un agent oxydant.

2. Composition selon la revendication 1, **caractérisée en ce que** l'agent réducteur est choisi parmi les amines tertiaires, le sodium métabisulfite, le sodium bisulfite, les métaux de transition, les composés azo, les alpha-aminosulfones, et leurs mélanges.

3. Composition selon l'une quelconque des revendications 1 ou 2, **caractérisée en ce que** l'agent réducteur est une amine tertiaire, et encore plus préférentiellement une amine ayant les formules (I) ou (II) suivantes : 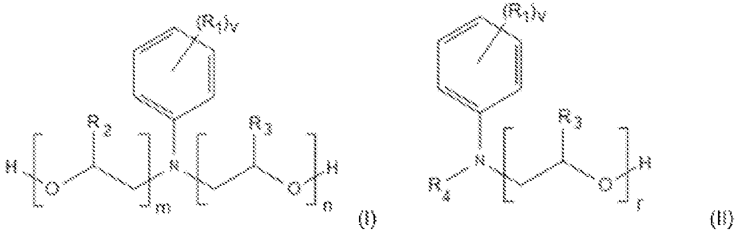 dans lesquelles :
- m et n sont, indépendamment l'un de l'autre, un nombre entier allant de 1 à 150, de préférence de 1 à 100, préférentiellement de 1 à 72, avantageusement de 1 à 36, encore plus avantageusement de 1 à 18;
- r est un nombre entier allant de 1 à 200, de préférence de 1 à 104, préférentiellement de 1 à 72, avantageusement de 1 à 36 ;
- R₁ représente un radical choisi dans le groupe constitué d'un alkyle, linéaire ou ramifié, saturé ou insaturé, comprenant de 1 à 20 atomes de carbone, de préférence de 1 à 10 atomes de carbone ; d'un (hétéro)aryle comprenant de 6 à 12 atomes de carbone ; d'un cycloalkyle comprenant de 3 à 12 atomes de carbone ;
- v représente un nombre entier allant de 0 à 5 ;
- R₂ et R₃ représentent, indépendamment l'un de l'autre, un atome d'halogène, un atome d'hydrogène ou un groupe alkyle, linéaire ou ramifié, comprenant de 1 à 12 atomes de carbone, ledit groupe alkyle étant éventuellement interrompu par au moins un atome d'oxygène ;
- R₄ représente un atome d'hydrogène, un groupe arylalkyle, ou un groupe alkyle, linéaire ou ramifié, comprenant de 1 à 20 atomes de carbone, de préférence un groupe alkyle comprenant de 1 à 12 atomes de carbone, avantageusement de 1 à 6 atomes de carbone ;
- à condition que m + n > 2, de préférence n + m ≥ 2,5.

4. Composition selon l'une quelconque des revendications 1 à 3, **caractérisée en ce que** le composant A comprend une teneur totale en agent(s) réducteur(s) allant de 0,1% à 5%, de préférence de 0,5% à 3%, en poids par rapport au poids total dudit composant A.

5. Composition selon l'une quelconque des revendications 1 à 4, **caractérisée en ce que** les alcane sulfonates de zinc ont l'une des formules (III) ou (IV) suivantes :
(R'-SO₃)₂⁻, Zn²⁺ (III)
(OH-R"-SO₃)₂⁻, Zn²⁺ (IV)
dans lesquelles R' représente un radical hydrocarboné, linéaire ou ramifié, comprenant de 1 à 18 atomes de carbone, et R" représente un radical hydrocarboné, linéaire ou ramifié, comprenant de 2 à 18 atomes de carbone.

6. Composition selon l'une quelconque des revendications 1 à 5, **caractérisée en ce que** la teneur totale en sel(s) de zinc dans le composant A va de 0,1% à 10%, de préférence de 0,5% à 5%, et encore plus préférentiellement de 0,5% à 2% en poids par rapport au poids total dudit composant A.

7. Composition selon l'une quelconque des revendications 1 à 6, **caractérisée en ce que** les monomère (méth)acrylate est choisi dans le groupe constitué :
- des composés ayant la formule (A) suivante :
CH₂=C(R^{a})-COOR^{b} (A)
dans laquelle :
- R^{a} représente un atome d'hydrogène ou un groupe alkyle comprenant de 1 à 4 atomes de carbone ;
- R^{b} est choisi dans le groupe constitué des alkyles, des cycloalkyles, des alcényles, des cycloalcényles, des alkylaryles, des arylalkyles ou des aryles, lesdits alkyles, des cycloalkyles, des alcényles, des cycloalcényles, des alkylaryles, des arylalkyles ou des aryles pouvant être éventuellement substitués et/ou interrompus par au moins un silane, un silicone, un oxygène, un halogène, un carbonyle, un hydroxyle, un ester, une urée, un uréthane, un carbonate, une amine, une amide, un soufre, un sulfonate, ou un sulfone ;
- des polyéthylène glycol di(méth)acrylates ;
- des polypropylène glycol di(méth)acrylates ;
- des tétrahydrofurane (méth)acrylates ;
- des hydroxyalkyl(méth)acrylate tels que par exemple l'hydroxypropyl(méth)acrylate ou l'hydroxyéthyl(méth)acrylate ;
- de l'hexanediol di(méth)acrylate ;
- du triméthylol propane tri(méth)acrylate ;
- du diéthylèneglycol di(méth)acrylate ;
- du triéthylène glycol di(méth)acrylate ;
- du tétraéthylène glycol di(méth)acrylate ;
- du dipropylène glycol di(méth)acrylate ;
- du di-(pentaméthylène glycol di(méth)acrylate ;
- du diglycérol tétra(méth)acrylate ;
- du tétraméthylène di(méth)acrylate ;
- de l'éthylène di(méth)acrylate ;
- des bisphénol A mono- et di(méth)acrylates ;
- des bisphénol F mono- et di(méth)acrylates; et
- de leurs mélanges.

8. Composition selon l'une quelconque des revendications 1 à 7, **caractérisé en ce que** le monomère (méth)acrylate est choisi parmi le (méth)acrylate de méthyle, le (méth)acrylate d'éthyle, le (méth)acrylate de 2-éthylhexyle, le (méth)acrylate d'heptyle, le (méth)acrylate de 2-tert-butylheptyle, le (méth)acrylate d'octyle, le (méth)acrylate de 3-isopropylheptyle, le (méth)acrylate de nonyle, le (méth)acrylate de décyle, le (méth)acrylate d'undécyle, le (méth)acrylate de 5-méthylundécyle, le (méth)acrylate de dodécyle, le (méth)acrylate de 2-méthyldodécyle, le (méth)acrylate de tridécyle, le (méth)acrylate de 5-méthyltridécyl, le (méth)acrylate de tétradécyle, le (méth)acrylate de pentadécyle, le (méth)acrylate d'hexadécyle, le (méth)acrylate de 2-méthylhexadécyle, le (méth)acrylate d'heptadécyl, le (méth)acrylate de 5-isopropylheptadécyle, le (méth)acrylate de 4-tert-butyloctadécyle, le (méth)acrylate de 5-éthyloctadécyle, le (méth)acrylate de 3-isopropyloctadécyle, le (méth)acrylate d'octadécyle, le (méth)acrylate de nonadécyle, le (méth)acrylate d'eicosyle, le (méth)acrylate de 3-vinylcyclohexyle, le (métha)crylate de bornyle, le (méth)acrylate de 2,4,5-tri-t-butyl-3-vinylcyclohexyle, le (méth)acrylate de 2,3,4,5-tétra-t-butylcyclohexyle; le (méth)acrylate de benzyle, le (méth)acrylate de phényle, le 2-(2-éthoxyéthoxy)éthyl (méth)acrylate, le (méth)acrylate de 2-phénoxyéthyle, et leurs mélanges.

9. Composition selon l'une quelconque des revendications 1 à 8, **caractérisée en ce que** le composant A comprend une teneur totale en monomère(s) (méth)acrylate allant de 20 % à 80 %, de préférence de 30 % à 70 %, avantageusement de 40 % à 60 % en poids par rapport au poids total dudit composant A.

10. Composition selon l'une quelconque des revendications 1 à 9, **caractérisée en ce qu'**elle comprend au moins un ingrédient additionnel choisi dans le groupe constitué des catalyseurs, des charges, des antioxydants, des stabilisants à la lumière/ absorbeurs d'UV, des désactivateurs de métaux, des antistatiques, des agents antivoile, des agents moussants, des biocides, des plastifiants, des lubrifiants, des émulsifiants, des colorants, des pigments, des agents rhéologiques, des modificateurs d'impact, des promoteurs d'adhésion, des azurants optiques, des ignifugeants, des agents anti-suintement, des agents de nucléation, des solvants, et de leurs mélanges.

11. Composition selon l'une quelconque des revendications 1 à 10, **caractérisée en ce qu'**elle comprend :
- un composant A comprenant :
- de 20 % à 80 % en poids de monomère(s) (méth)acrylate ;
- de 0,1 % à 5 % en poids d'agent(s) réducteur(s) ;
- de 0,1% à 10% en poids de sel(s) de zinc tel que défini dans la revendication 1 ;
- de 2% à 30% en poids de modificateur(s) d'impact de type coeur-écorce ;
- de 0% à 40% en poids de composé(s) uréthane-acrylate ;
par rapport au poids total dudit composant A ;
- une composant B comprenant :
- de 1% à 50 % en poids d'agent(s) oxydant(s); et
- de 20% à 80% en poids de plastifiant(s) ;
par rapport au poids total dudit composant B.

12. Composition selon l'une quelconque des revendications 1 à 11, **caractérisée en ce que** le ratio volumique composant A/composant B va de 100/5 à 1/1, de préférence de 20/1 à 1/1, préférentiellement de 10/1 à 1/1.

13. Utilisation d'une composition telle que définie selon l'une des revendications 1 à 12, comme adhésif, mastic ou revêtement, de préférence comme adhésif.

14. Procédé d'assemblage de deux substrats par collage, comprenant :
- l'enduction sur au moins un des deux substrats à assembler d'une composition obtenue par mélange des composants A et B telles que définis selon l'une quelconque des revendications 1 à 12; puis
- la mise en contact effective des deux substrats ;
- la réticulation de la composition.

## Patentansprüche

1. Zweikomponentige vernetzbare Zusammensetzung, umfassend:
- eine Komponente A, umfassend:
∘ ein (Meth)acrylat-Monomer;
∘ ein Reduktionsmittel;
∘ ein Zinksalz, das aus Zinkalkansulfonaten, Zinkacetat und Mischungen davon ausgewählt ist;
- eine Komponente B, die ein Oxidationsmittel umfasst.

2. Zusammensetzung nach Anspruch 1, **dadurch gekennzeichnet, dass** das Reduktionsmittel aus tertiären Aminen, Natriummetabisulfit, Natriumbisulfit, Übergangsmetallen, Azoverbindungen, Alpha-Aminosulfonen und Mischungen davon ausgewählt ist.

3. Zusammensetzung nach Anspruch 1 oder 2, **dadurch gekennzeichnet, dass** es sich bei dem Reduktionsmittel um ein tertiäres Amin und noch weiter bevorzugt um ein Amin mit den nachstehenden Formeln (I) oder (II) handelt: 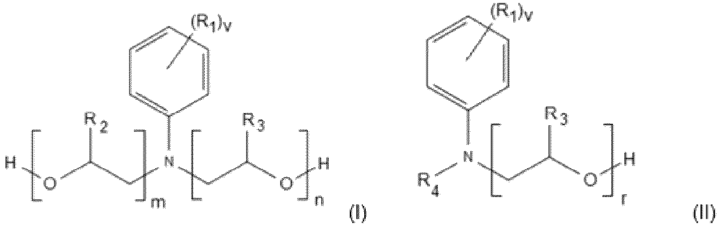 in denen:
- m und n unabhängig voneinander eine ganze Zahl im Bereich von 1 bis 150, bevorzugt 1 bis 100, vorzugsweise 1 bis 72, vorteilhafterweise 1 bis 36, noch vorteilhafter 1 bis 18, sind;
- r eine ganze Zahl im Bereich von 1 bis 200, bevorzugt 1 bis 104, vorzugsweise 1 bis 72, vorteilhafterweise 1 bis 36, ist;
- R₁ für einen Rest steht, der aus der Gruppe bestehend aus einem gesättigten oder ungesättigten, linearen oder verzweigten Alkyl mit 1 bis 20 Kohlenstoffatomen, bevorzugt 1 bis 10 Kohlenstoffatomen; einem (Hetero)aryl mit 6 bis 12 Kohlenstoffatomen und einem Cycloalkyl mit 3 bis 12 Kohlenstoffatomen ausgewählt ist;
- v für eine ganze Zahl im Bereich von 0 bis 5 steht;
- R₂ und R₃ unabhängig voneinander für ein Halogenatom, ein Wasserstoffatom oder eine lineare oder verzweigte Alkylgruppe mit 1 bis 12 Kohlenstoffatomen stehen, wobei die Alkylgruppe gegebenenfalls durch mindestens ein Sauerstoffatom unterbrochen ist;
- R₄ für ein Wasserstoffatom, eine Arylalkylgruppe oder eine lineare oder verzweigte Alkylgruppe mit 1 bis 20 Kohlenstoffatomen, bevorzugt eine Alkylgruppe mit 1 bis 12 Kohlenstoffatomen, vorteilhafterweise mit 1 bis 6 Kohlenstoffatomen, steht;
- mit der Maßgabe, dass m + n > 2, bevorzugt n + m ≥ 2,5.

4. Zusammensetzung nach einem der Ansprüche 1 bis 3, **dadurch gekennzeichnet, dass** die Komponente A einen Gesamtgehalt an Reduktionsmittel(n) im Bereich von 0,1 bis 5 Gew.-%, bevorzugt 0,5 bis 3 Gew.-%, bezogen auf das Gesamtgewicht der Komponente A, umfasst.

5. Zusammensetzung nach einem der Ansprüche 1 bis 4, **dadurch gekennzeichnet, dass** die Zinkalkansulfonate eine der nachstehenden Formeln (III) oder (IV) aufweisen:
(R'-SO₃)₂⁻, Zn²⁺ (III)
(OH-R"-SO₃)₂⁻, Zn²⁺ (IV)
in denen R' für einen linearen oder verzweigten Kohlenwasserstoffrest mit 1 bis 18 Kohlenstoffatomen steht und R'' für einen linearen oder verzweigten Kohlenwasserstoffrest mit 2 bis 18 Kohlenstoffatomen steht.

6. Zusammensetzung nach einem der Ansprüche 1 bis 5, **dadurch gekennzeichnet, dass** der Gesamtgehalt an Zinksalz(en) in der Komponente A im Bereich von 0,1 bis 10 Gew.-%, bevorzugt 0,5 bis 5 Gew.-% und noch weiter bevorzugt 0,5 bis 2 Gew.-%, bezogen auf das Gesamtgewicht der Komponente A, liegt.

7. Zusammensetzung nach einem der Ansprüche 1 bis 6, **dadurch gekennzeichnet, dass** das (Meth)acrylat-Monomer ausgewählt ist aus der Gruppe bestehend aus:
- Verbindungen mit der folgenden Formel (A):
CH₂=C(R^{a})-COOR^{b} (A)
in der:
- R^{a} für ein Wasserstoffatom oder eine Alkylgruppe mit 1 bis 4 Kohlenstoffatomen steht;
- R^{b} aus der Gruppe bestehend aus Alkylgruppen, Cycloalkylgruppen, Alkenylgruppen, Cycloalkenylgruppen, Alkylarylgruppen, Arylalkylgruppen oder Arylgruppen ausgewählt ist, wobei die Alkylgruppen, Cycloalkylgruppen, Alkenylgruppen, Cycloalkenylgruppen, Alkylarylgruppen, Arylalkylgruppen oder Arylgruppen gegebenenfalls durch mindestens ein Silan, ein Silikon, einen Sauerstoff, ein Halogen, ein Carbonyl, ein Hydroxyl, einen Ester, einen Harnstoff, ein Urethan, ein Carbonat, ein Amin, ein Amid, einen Schwefel, ein Sulfonat oder ein Sulfon substituiert und/oder unterbrochen sind;
- Polyethylenglykoldi(meth)acrylaten;
- Polypropylenglykoldi(meth)acrylaten;
- Tetrahydrofuran(meth)acrylaten;
- Hydroxyalkyl(meth)acrylaten wie beispielsweise Hydroxypropyl(meth)acrylat oder Hydroxyethyl(meth)acrylat;
- Hexandioldi(meth)acrylat;
- Trimethylolpropantri(meth)acrylat;
- Diethylenglykoldi(meth)acrylat;
- Triethylenglykoldi(meth)acrylat;
- Tetraethylenglykoldi(meth)acrylat;
- Dipropylenglykoldi(meth)acrylat;
- Di(pentamethylenglykol)di(meth)acrylat;
- Diglycerintetra(meth)acrylat;
- Tetramethylendi(meth)acrylat;
- Ethylendi(meth)acrylat;
- Bisphenol-A-mono- und -di(meth)acrylaten;
- Bisphenol-F-mono- und -di(meth)acrylaten; und
- Mischungen davon.

8. Zusammensetzung nach einem der Ansprüche 1 bis 7, **dadurch gekennzeichnet, dass** das (Meth)acrylat-Monomer ausgewählt ist aus Methyl(meth)acrylat, Ethyl(meth)acrylat, 2-Ethylhexyl(meth)acrylat, Heptyl(meth)acrylat, 2-tert-Butylheptyl(meth)acrylat, Octyl(meth)acrylat, 3-Isopropylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-Isopropylheptadecyl(meth)acrylat, 4-tert-Butyloctadecyl(meth)acrylat, 5-Ethyloctadecyl(meth)acrylat, 3-Isopropyloctadecyl(meth)acrylat, Octadecyl(meth)acrylat, Nonadecyl(meth)acrylat, Eicosyl(meth)acrylat, 3-Vinylcyclohexyl(meth)acrylat, Bornyl(meth)acrylat, 2,4,5-Tri-t-butyl-3-vinylcyclohexyl(meth)acrylat, 2,3,4,5-Tetra-t-butylcyclohexyl(meth)acrylat; Benzyl(meth)acrylat, Phenyl(meth)acrylat, 2-(2-Ethoxyethoxy)ethyl(meth)acrylat, 2-Phenoxyethyl(meth)acrylat und Mischungen davon.

9. Zusammensetzung nach einem der Ansprüche 1 bis 8, **dadurch gekennzeichnet, dass** die Komponente A einen Gesamtgehalt an (Meth)acrylat-Monomer(en) im Bereich von 20 bis 80 Gew.-%, bevorzugt 30 bis 70 Gew.-%, vorteilhafterweise 40 bis 60 Gew.-%, bezogen auf das Gesamtgewicht der Komponente A, umfasst.

10. Zusammensetzung nach einem der Ansprüche 1 bis 9, **dadurch gekennzeichnet, dass** sie mindestens einen zusätzlichen Bestandteil umfasst, der aus der Gruppe bestehend aus Katalysatoren, Füllstoffen, Antioxidantien, Lichtschutzmitteln/UV-Absorbern, Metalldesaktivatoren, Antistatika, Antischleiermitteln, Schäumungsmitteln, Bioziden, Weichmachern, Schmiermitteln, Emulgatoren, Farbmitteln, Pigmenten, Rheologiemitteln, Schlagzähigkeitsmodifikatoren, Haftvermittlern, optischen Aufhellern, Flammschutzmitteln, Mitteln gegen Ausschwitzen, Nukleierungsmitteln, Lösungsmitteln und Mischungen davon ausgewählt ist.

11. Zusammensetzung nach einem der Ansprüche 1 bis 10, **dadurch gekennzeichnet, dass** sie Folgendes umfasst:
- eine Komponente A, umfassend:
- 20 bis 80 Gew.-% (Meth)acrylat-Monomer(e);
- 0,1 bis 5 Gew.-% Reduktionsmittel;
- 0,1 bis 10 Gew.-% Zinksalz(e) gemäß Anspruch 1;
- 2 bis 30 Gew.-% Kern-Schale-Schlagzähigkeitsmodifikator(en);
- 0 bis 40 Gew.-% Urethanacrylat-Verbindung(en);
bezogen auf das Gesamtgewicht der Komponente A;
- eine Komponente B, umfassend:
- 1 bis 50 Gew.-% Oxidationsmittel; und
- 20 bis 80 Gew.-% Weichmacher;
bezogen auf das Gesamtgewicht der Komponente B.

12. Zusammensetzung nach einem der Ansprüche 1 bis 11, **dadurch gekennzeichnet, dass** das Volumenverhältnis von Komponente A/Komponente B im Bereich von 100/5 bis 1/1, bevorzugt von 20/1 bis 1/1, vorzugsweise von 10/1 bis 1/1, liegt.

13. Verwendung einer Zusammensetzung gemäß einem der Ansprüche 1 bis 12 als Klebstoff, Dichtstoff oder Beschichtung, vorzugsweise als Klebstoff.

14. Verfahren zum Verbinden von zwei Substraten durch Kleben, umfassend:
- das Beschichten mindestens eines der zwei zu verklebenden Substrate mit einer durch Mischen der Komponenten A und B gemäß einem der Ansprüche 1 bis 12 erhaltenen Mischung; dann
- das wirksame Inkontaktbringen der zwei Substrate;
- das Vernetzen der Zusammensetzung.

## Claims

1. Two-component crosslinkable composition comprising:
- a component A comprising:
∘ a (meth)acrylate monomer;
∘ a reducing agent;
∘ a zinc salt chosen from zinc alkanesulfonates, zinc acetate, and mixtures thereof;
- a component B comprising an oxidizing agent.

2. Composition according to Claim 1, **characterized in that** the reducing agent is chosen from tertiary amines, sodium metabisulfite, sodium bisulfite, transition metals, azo compounds, alpha-aminosulfones, and mixtures thereof.

3. Composition according to either one of Claims 1 and 2, **characterized in that** the reducing agent is a tertiary amine, and even more preferentially an amine having the formula (I) or (II) below: 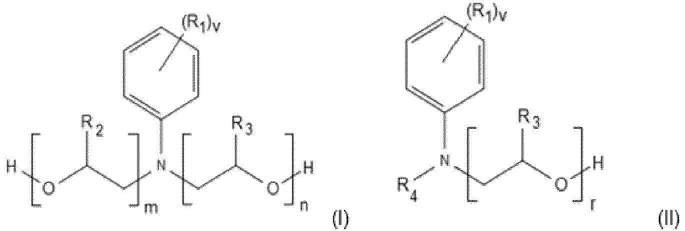 wherein:
- m and n are, independently of one another, an integer ranging from 1 to 150, preferably from 1 to 100, preferentially from 1 to 72, advantageously from 1 to 36, more advantageously still from 1 to 18;
- r is an integer ranging from 1 to 200, preferably from 1 to 104, preferentially from 1 to 72, advantageously from 1 to 36;
- R₁ represents a radical chosen from the group consisting of a saturated or unsaturated and linear or branched alkyl comprising from 1 to 20 carbon atoms, preferably from 1 to 10 carbon atoms; of a (hetero)aryl comprising from 6 to 12 carbon atoms; of a cycloalkyl comprising from 3 to 12 carbon atoms;
- v represents an integer ranging from 0 to 5;
- R₂ and R₃ represent, independently of one another, a halogen atom, a hydrogen atom or a linear or branched alkyl group comprising from 1 to 12 carbon atoms, said alkyl group being optionally interrupted by at least one oxygen atom;
- R₄ represents a hydrogen atom, an arylalkyl group or a linear or branched alkyl group comprising from 1 to 20 carbon atoms, preferably an alkyl group comprising from 1 to 12 carbon atoms, advantageously from 1 to 6 carbon atoms;
- on the condition that m + n > 2, preferably n + m ≥ 2.5.

4. Composition according to any one of Claims 1 to 3, **characterized in that** component A comprises a total content of reducing agent(s) ranging from 0.1% to 5%, preferably from 0.5% to 3%, by weight relative to the total weight of said component A.

5. Composition according to any one of Claims 1 to 4, **characterized in that** the zinc alkanesulfonates have one of the formulae (III) or (IV) below:
(R'-SO₃)₂⁻, Zn²⁺ (III)
(OH-R"-SO₃)₂⁻, Zn²⁺ (IV)
wherein R' represents a linear or branched hydrocarbon radical comprising from 1 to 18 carbon atoms, and R" represents a linear or branched hydrocarbon radical comprising from 2 to 18 carbon atoms.

6. Composition according to any one of Claims 1 and 5, **characterized in that** the total content of zinc salt(s) in component A ranges from 0.1% to 10%, preferably from 0.5% to 5%, and more preferentially still from 0.5% to 2% by weight relative to the total weight of said component A.

7. Composition according to any one of Claims 1 to 6, **characterized in that** the (meth)acrylate monomer is chosen from the group consisting of:
- compounds having formula (A) below:
CH₂=C(R^{a})-COOR^{b} (A)
wherein:
- R^{a} represents a hydrogen atom or an alkyl group comprising from 1 to 4 carbon atoms;
- R^{b} is chosen from the group consisting of alkyls, cycloalkyls, alkenyls, cycloalkenyls, alkylaryls, arylalkyls and aryls, it being possible for said alkyls, cycloalkyls, alkenyls, cycloalkenyls, alkylaryls, arylalkyls or aryls to be optionally substituted and/or interrupted by at least one silane, one silicone, one oxygen, one halogen, one carbonyl, one hydroxyl, one ester, one urea, one urethane, one carbonate, one amine, one amide, one sulfur, one sulfonate or one sulfone;
- polyethylene glycol di(meth)acrylates;
- polypropylene glycol di(meth)acrylates;
- tetrahydrofuran (meth)acrylates;
- hydroxyalkyl (meth)acrylates such as, for example, hydroxypropyl (meth)acrylate or hydroxyethyl (meth)acrylate;
- hexanediol di(meth)acrylate;
- trimethylolpropane tri(meth)acrylate;
- diethylene glycol di(meth)acrylate;
- triethylene glycol di(meth)acrylate;
- tetraethylene glycol di(meth)acrylate;
- dipropylene glycol di(meth)acrylate;
- di(pentamethylene glycol) di(meth)acrylate;
- diglyceryl tetra(meth)acrylate;
- tetramethylene di(meth)acrylate;
- ethylene di(meth)acrylate;
- bisphenol A mono- and di(meth)acrylates;
- bisphenol F mono- and di(meth)acrylates; and
- mixtures thereof.

8. Composition according to any one of Claims 1 to 7, **characterized in that** the (meth)acrylate monomer is chosen from methyl (meth)acrylate, ethyl (meth)acrylate, 2-ethylhexyl (meth)acrylate, heptyl (meth)acrylate, 2-tert-butylheptyl (meth)acrylate, octyl (meth)acrylate, 3-isopropylheptyl (meth)acrylate, nonyl (meth)acrylate, decyl (meth)acrylate, undecyl (meth)acrylate, 5-methylundecyl (meth)acrylate, dodecyl (meth)acrylate, 2-methyldodecyl (meth)acrylate, tridecyl (meth)acrylate, 5-methyltridecyl (meth)acrylate, tetradecyl (meth)acrylate, pentadecyl (meth)acrylate, hexadecyl (meth)acrylate, 2-methylhexadecyl (meth)acrylate, heptadecyl (meth)acrylate, 5-isopropylheptadecyl (meth)acrylate, 4-tert-butyloctadecyl (meth)acrylate, 5-ethyloctadecyl (meth)acrylate, 3-isopropyloctadecyl (meth)acrylate, octadecyl (meth)acrylate, nonadecyl (meth)acrylate, eicosyl (meth)acrylate, 3-vinylcyclohexyl (meth)acrylate, bornyl (metha)crylate, 2,4,5-tri-t-butyl-3-vinylcyclohexyl (meth)acrylate, 2,3,4,5-tetra-t-butylcyclohexyl (meth)acrylate; benzyl (meth)acrylate, phenyl (meth)acrylate, 2-(2-ethoxyethoxy)ethyl (meth)acrylate, 2-phenoxyethyl (meth)acrylate, and mixtures thereof.

9. Composition according to any one of Claims 1 to 8, **characterized in that** component A comprises a total content of (meth)acrylate monomer(s) ranging from 20% to 80%, preferably from 30% to 70%, advantageously from 40% to 60% by weight relative to the total weight of said component A.

10. Composition according to any one of Claims 1 to 9, **characterized in that** it comprises at least one additional ingredient chosen from the group consisting of catalysts, fillers, antioxidants, light stabilizers/UV absorbers, metal deactivators, antistatic agents, antifogging agents, foaming agents, biocides, plasticizers, lubricants, emulsifiers, dyes, pigments, rheological agents, impact modifiers, adhesion promoters, optical brighteners, flame retardants, antisweating agents, nucleating agents, solvents, and mixtures thereof.

11. Composition according to any one of Claims 1 to 10, **characterized in that** it comprises:
- a component A comprising:
- from 20% to 80% by weight of (meth)acrylate monomer(s);
- from 0.1% to 5% by weight of reducing agent(s);
- from 0.1% to 10% by weight of zinc salt(s) as defined in Claim 1;
- from 2% to 30% by weight of core-shell impact modifier(s);
- from 0% to 40% by weight of urethane-acrylate compound(s);
relative to the total weight of said component A;
- a component B comprising:
- from 1% to 50% by weight of oxidizing agent(s); and
- from 20% to 80% by weight of plasticizer(s);
relative to the total weight of said component B.

12. Composition according to any one of Claims 1 to 11, **characterized in that** component A/component B volume ratio ranges from 100/5 to 1/1, preferably from 20/1 to 1/1, preferentially from 10/1 to 1/1.

13. Use of a composition as defined in one of Claims 1 to 12, as an adhesive, mastic or coating, preferably as an adhesive.

14. Process for assembling two substrates by adhesive bonding, comprising:
- coating at least one of the two substrates to be assembled with a composition obtained by mixing components A and B as defined in any one of Claims 1 to 12; and then
- effectively bringing the two substrates into contact;
- crosslinking the composition.
